**Europäisches Patentamt**

**European Patent Office**

**Office européen des brevets**

(11) Veröffentlichungsnummer: **0 311 877 B1**

## EUROPÄISCHE PATENTSCHRIFT

(45) Veröffentlichungstag der Patentschrift: **17.06.92**

(21) Anmeldenummer: **88116428.9**

(22) Anmeldetag: **05.10.88**

(51) Int. Cl.⁵: **F02B 3/04**, F02B 47/02, F23D 11/44

(54) Verfahren und Zylinderkopf zur Zuführung von Kraftstoff in einen Kolbenmotor.

(30) Priorität: **10.10.87 DE 3734346**

(43) Veröffentlichungstag der Anmeldung:
**19.04.89 Patentblatt 89/16**

(45) Bekanntmachung des Hinweises auf die
Patenterteilung:
**17.06.92 Patentblatt 92/25**

(84) Benannte Vertragsstaaten:
**AT BE CH FR GB IT LI LU NL SE**

(56) Entgegenhaltungen:
**EP-A- 0 177 484**
**EP-A- 0 285 190**
**DE-A- 3 504 699**
**US-A- 3 422 803**
**US-A- 3 990 408**

(73) Patentinhaber: **Forschungszentrum Jülich GmbH**
**Postfach 1913**
**W-5170 Jülich(DE)**

(72) Erfinder: **Förster, Siegfried, Dr.**
**Ottenfeld 1**
**W-5110 Alsdorf(DE)**
Erfinder: **Ouell, Peter, Dr.**
**Birkenweg 23**
**W-5100 Aachen-Haaren(DE)**

# Beschreibung

Die Erfindung bezieht sich auf ein Verfahren zur Zuführung eines Brennstoff- und Wasseranteile enthaltendes Kraftstoffgemisch in einen Zylinderraum eines Kolbenmotors nach Ansaugen von Verbrennungsluft. Gegenstand der Erfindung ist auch ein Zylinderkopf zur Durchführung des Verfahrens.

Der Betrieb von Kolbenmotoren mit Kraftstoff/Wassergemischen wird beispielsweise in DE-A-3 504 699 und EP-A-0 177 484 beschrieben. In der zuerst genannten Druckschrift wird eine Wasser-Brennstoff-Emulsion hergestellt, die in den Zylinderraum eingespritzt wird. Aus EP-A-0 177 484 ist es bekannt, von der Brennkraftmaschine ein Brennstoffdampf/Wasserdampf und Verbrennungsluft enthaltendes Kraftstoffgemisch anzusaugen. Nachteilig ist, daß dabei das Mischungsverhältnis von Brennstoff und Wasser nur beschränkt einstellbar ist.

Aufgabe der Erfindung ist es, ein Brennstoffdampf/Wasserdampf-Gemisch in den Zylinderraum eines Kolbenmotors so einzuführen, daß ein optimaler Energiegewinn erzielt wird.

Diese Aufgabe wird gemäß der Erfindung durch die im kennzeichnenden Teil des Patentanspruchs 1 angegebenen Maßnahmen gelöst. Danach wird in den Zylinderraum in beim Kompressionshub vorkomprimierte Verbrennungsluft vor Erreichen des oberen Kolbentotpunktes ein unter Druck stehendes Brennstoffdampf/Wasserdampf-Gemisch eingeführt. Bevorzugt tritt nach Patentanspruch 2 das Brennstoffdampf/Wasserdampf-Gemisch mit hoher bis an die Schallgeschwindigkeit reichenden Geschwindigkeit in den Zylinderraum ein, um konstante Bedingungen bei der Brennstoffdampf/Wasserdampf-Injektion zu erreichen. Die wesentlichen Vorteile der Erfindung bestehen darin, daß durch die Anwesenheit des Wasserdampfes im Brennstoffdampf/Wasserdampf-Gemisch bei der Verbrennung des Brennstoffdampfes im Verbrennungsraum des Zylinders durch die Anwesenheit von Wasserdampf die Verbrennungstemperatur im Zylinderraum abgesenkt wird, was zu einer bedeutenden Reduzierung der Stickoxidanteile führt. Die durch das Zuführen und Komprimieren des Wasserdampfes durch Expansion gewinnbare Energie führt zugleich zu einer Verbesserung des Motorwirkungsgrades und zu einer Erhöhung der volumetrischen Motorleistung.

Um eine möglichst optimale Verbrennung zu erzielen, wird das Brennstoffdampf/Wasserdampf-Gemisch so eingestellt, daß sich die Wasserdampfmenge zur Brennstoffdampfmenge wie 1 : 1 bis 3 : 1 verhält, Patentanspruch 3. Das Brennstoffdampf/Wasserdampf-Gemisch ist in den Zylinderraum mit einer Temperatur einzuführen, die oberhalb der Taupunkttemperatur des Brennstoffes im Brennstoffdampf/Wasserdampf-Gemisch liegt, Patentanspruch 4. Die Verbrennungsluft wird nach Patentanspruch 5 in einem nahezu stöchiometrischen Mengenverhältnis zur Brennstoffdampfmenge in den Zylinderraum eingesaugt und komprimiert.

Zur Durchführung des erfindungsgemäßen Verfahrens ist nach Patentanspruch 6 ein Zylinderkopf geeignet, der Lufteinlaßventil, Abgasauslaßventil und einen im Verbrennungsraum im oberen Kolbentotpunkt mündenden Einlaß mit regelbarem Einlaßventil für ein Brennstoff- und Wasseranteile enthaltendes Kraftstoffgemisch aufweist. Das Einlaßventil ist mit einer für einen Druck oberhalb des Kompressionsdruckes geeigneten Gemischdruckleitung verbunden, die am Ausgang eines Verdampfers zur Erzeugung eines Brennstoffdampf/Wasserdampf-Gemisches angeschlossen ist. Das Einlaßventil ist zum Zuführen des Brennstoffdampf/Wasserdampf-Gemisches beim Kompressionshub zu öffnen.

Vorteilhaft ist, daß prinzipiell bereits vorhandene Zylinderköpfe zur Durchführung des Verfahrens genutzt werden können. Einer Neugestaltung bedarf es lediglich insoweit, als statt der Ansaugleitung für den Brennstoff jetzt eine Druckleitung anzuschließen ist, über die das Brennstoffdampf/Wasserdampf-Gemisch in den Zylinderraum eingeblasen wird. Die Gemischdruckleitung ist unmittelbar am Ausgang eines Verdampfers zur Erzeugung des Brennstoffdampf/Wasserdampf-Gemisches angeschlossen, wobei der erforderliche Druck für das Brennstoffdampf/Wasserdampf-Gemisch in Ausgestaltung der Erfindung bereits vor dem Verdampfer erzeugt wird. Am Eingang des Verdampfers mündet eine druckwasserführende Wasserleitung und eine Brennstoffleitung, die druckseitig an einer Wasserpumpe bzw. einer Brennstoffpumpe angeschlossen sind, Patentanspruch 7.

Zur Erzeugung des Brennstoffdampf/Wasserdampf-Gemisches werden zweckmäßig heiße Motorabgase genutzt, die den Verdampfer zur Erwärmung des Brennstoffdampf/Wasserdampf-Gemisches umströmen, Patentanspruch 8.

Das Brennstoffdampf/Wasserdampf-Gemisch kann selbstzündend aber auch fremdgezündet sein. Im zuletzt genannten Fall befindet sich im Verbrennungsraum ein elektrischer Zünder für das Brennstoffdampf/Wasserdampf-Gemisch, Patentanspruch 9.

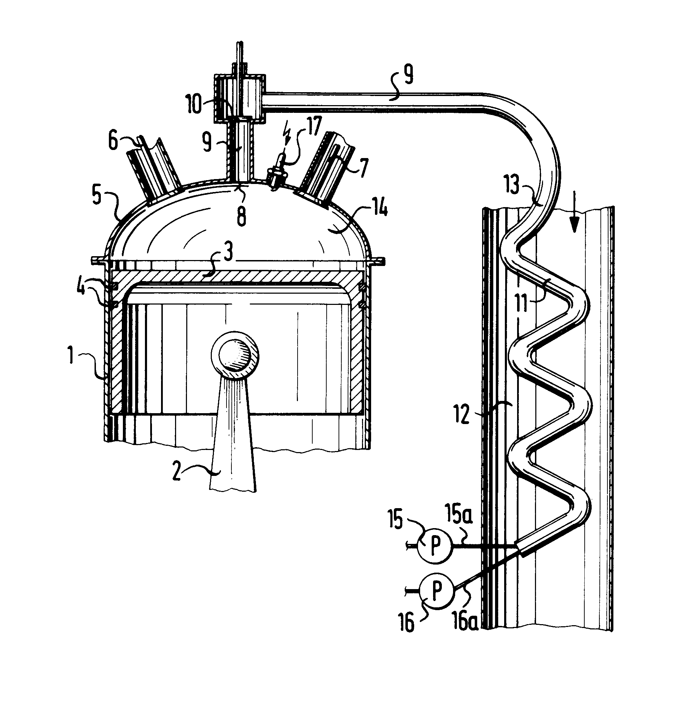

Die Erfindung wird im folgenden anhand eines Ausführungsbeispiels, das in der Zeichnung schematisch wiedergegeben ist, näher erläutert.

In der Zeichnung ist ein Zylinderkopf 1 mit einem von einer Pleuelstange 2 bewegtem Kolben 3 mit Kolbenringen 4 wiedergegeben. Im Zylinderkopfdeckel 5 sind ein mit Lufteinlaßventeil 6 für anzusaugende Verbrennungsluft und ein Abgasauslaßventil 7 für das abströmende Abgas vorgesehen. Am Zylinderkopfdeckel 5 ist ein weiterer Einlaß 8 angebracht, an den eine Gemischleitung 9 mit einem regelbaren Einlaßventil 10 für ein Brennstoffdampf/Wasserdampf-Gemisch angeschlossen ist. Das Brennstoffdampf/Wasserdampf-Gemisch wird in einem Verdampfer 11 erzeugt, der als Rohrschlange ausgebildet ist, in der der flüssige Brennstoff und das Wasser verdampft. Ein Verdampfer dieser Art ist in der nicht vorveröffentlichten Patentanmeldung P 36 26 933.6-13 beschrieben. Der Verdampfer 11 ist in eine vom Kolbenmotor kommende Abgasleitung 12 eingesetzt und wird vom heißen, aus dem Zylinderraum abströmenden Abgas umspült. Die Abgaswärme wird so in vorteilhafter Weise zur Erzeugung des Brennstoffdampf/Wasserdampf-Gemisches ausgenutzt.

Das erzeugte Brennstoffdampf/Wasserdampf-Gemisch wird vom Verdampferausgang 13 über die Gemischleitung 9 und das Einlaßventil 10 zum Zylinderraum 14 geführt. Der Zylinderraum 14 ist in der Zeichnung schematisch dargestellt. Der Zylinderraum 14 schließt auch einen gegebenenfalls gesondert gestälteten Verbrennungsraum ein, wie er beispielsweise bei Diesel-Kraftmaschinen bekannt ist. Das Öffnen des Einlaßventils 10 wird über die Motordrehzahl gesteuert.

Im Ausführungsbeispiel wird das Einlaßventil 10 so gesteuert, daß das Brennstoffdampf/Wasserdampf-Gemisch am Ende des Kompressionshubes nahe des oberen Totpunktes in den Zylinderraum 14 eintritt. Das Brennstoffdampf/Wasserdampf-Gemisch wird mit Schallgeschwindigkeit eingeblasen, die bei einem auf etwa 220° C erwärmten Brennstoffdampf/Wasserdampf-Gemisch etwa 440 Meter pro Sekunde beträgt. Der hierzu notwendige Druck in der Gemischleitung 9 wird durch Flüssigkeitspumpen 15, 16 erzeugt, die einerseits den flüssigen Brennstoff, Brennstoffpumpe 15, andererseits das Wasser, Wasserpumpe 16, über eine Brennstoffleitung 15a bzw. eine Wasserleitung 16a in den Verdampfer 11 einleiten. Aus dem Verdampfer tritt das Brennstoffdampf/Wasserdampf-Gemisch mit überhitztem Wasserdampf aus.

Nach Zuführung des Brennstoffdampf/Wasserdampf-Gemisches in den Zylinderraum 14 schließt das Einlaßventil 10 und das mit Verbrennungsluft gemischte Brennstoffdampf/Wasserdampf-Gemisch wird über einen Zünder 17 gezündet.

Als Brennstoffe für das Verfarhen eignen sich insbesondere Diese-Kraftstoffe und Schweröle, aber auch Bio-Kraftstoffe, wie Pflanzenöle.

## Patentansprüche

1. Verfahren zur Zuführung eines Brennstoff- und Wasseranteile enthaltenden Kraftstoffgemisches in einen Zylinderraum eines Kolbenmotors nach Ansaugen von Verbrennungsluft, **dadurch gekennzeichnet,** daß in beim Kompressionshub vorkomprimierte Verbrennungsluft vor Erreichen des oberen Kolbentotpunkts ein unter Druck stehendes Brennstoffdampf/Wasserdampf-Gemisch eingeführt wird.

2. Verfahren nach Anspruch 1, **dadurch gekennzeichnet,** daß das Brennstoffdampf/Wasserdampf-Gemisch mit hoher bis an die Schallgeschwindigkeit reichenden Geschwindigkeit in den Zylinderraum eintritt.

3. Verfahren nach Anspruch 1 oder 2, **dadurch gekennzeichnet,** daß das Brennstoffdampf/Wasserdampf-Gemisch ein Mengenverhältnis von Wasserdampf zu Brennstoffdampf von 1 : 1 bis 3 : 1 aufweist.

4. Verfahren nach einem der Ansprüche 1, 2 oder 3, **dadurch gekennzeichnet,** daß das Brennstoffdampf/Wasserdampf-Gemisch mit einer Temperatur oberhalb der Taupunkttemperatur des Brennstoffes im Brennstoffdampf/Wasserdampf-Gemisch eingeführt wird.

5. Verfahren nach einem der vorhergehenden Ansprüche, **dadurch gekennzeichnet,** daß die Verbrennungsluft in einem nahezu stöchiometrischen Mengenverhältnis zum Brennstoffdampf im Brennstoffdampf/Wasserdampf-Gemisch in den Zylinderraum eintritt.

6. Zylinderkopf für einen Kolbenmotor zur Durchführung des Verfahrens nach einem der vorhergehenden Ansprüche mit Lufteinlaßventil, Abgasauslaßventil und einem im Verbrennungsraum am oberen Kolbentotpunkt mündenden Einlaß mit regelbarem Einlaßventil für ein Brennstoff- und Wasseranteile enthaltendes Kraftstoffgemisch, **dadurch gekennzeichnet,** daß das Einlaßventil (10) mit einer für einen Druck oberhalb des Kompressionsdruckes geeigneten Gemischdruckleitung (9) verbunden ist, die am Ausgang (13) eines Verdampfers (11) zur Erzeugung eines Brennstoffdampf/Wasserdampf-Gemisches angeschlossen ist, und daß das Einlaßventil (10) zum Einführen des Brennstoffdampf/Wasserdampf-Gemisches beim Kompressionshub zu öffnen ist.

7. Zylinderkopf nach Anspruch 6,
**dadurch gekennzeichnet,**
daß am Verdampfer (11) eine druckwasserführende Wasserleitung (16b) und eine Brennstoffleitung (15a) münden, die druckseitig an einer Wasserpumpe (16) bzw. einer Brennstoffpumpe (15) angeschlossen sind.

8. Zylinderkopf nach Anspruch 6 oder 7,
**dadurch gekennzeichnet,**
daß der Verdampfer (11) zur Verdampfung des Brennstoff/Wasserdampf-Gemisches von heißem Motorabgas erwärmt wird.

9. Zylinderkopf nach einem der Ansprüche 6 bis 8,
**dadurch gekennzeichnet,**
daß der Zylinderraum (14) einen elektrischen Zünder (17) für das Brennstoffdampf/Wasserdampf-Gemisch aufweist.

## Claims

1. Method for feeding a fuel mixture containing fuel and water components into a cylinder space of a piston engine after the induction of combustion air, characterised in that a fuel vapour/steam mixture under pressure is introduced into combustion air, precompressed during the compression stroke, before the top dead centre position of the piston is reached.

2. Method according to Claim 1, characterised in that the fuel vapour/steam mixture enters the cylinder space at a high speed which may be up to the speed of sound.

3. Method according to Claim 1 or 2, characterised in that the fuel vapour/steam mixture has a quantity ratio of steam to fuel vapour of 1:1 to 3:1.

4. Method according to one of Claims 1, 2 or 3, characterised in that the fuel vapour/steam mixture is introduced at a temperature above the dew point of the fuel in the fuel vapour/steam mixture.

5. Method according to one of the preceding claims, characterised in that the combustion air enters the cylinder space in a virtually stoichiometric quantity ratio to the fuel vapour in the fuel vapour/steam mixture.

6. Cylinder head for a piston engine for carrying out the method according to one of the preceding claims, with an air inlet valve, an exhaust outlet valve and an inlet opening into the combustion space at the top dead centre position of the piston and having a controllable inlet valve for a fuel mixture containing fuel and water components, characterised in that the inlet valve (10) is connected to a mixture delivery line (9) which is suitable for a pressure above the compression pressure and is connected to the outlet (13) of a vaporizer (11) for producing a fuel vapour/steam mixture, and in that the inlet valve (10) for introducing the fuel vapour/steam mixture is to be opened during the compression stroke.

7. Cylinder head according to Claim 6, characterised in that opening into the vaporizer (11) are a water line (16b) carrying pressurized water and a fuel line (15a), which are connected on the pressure side to a water pump (16) and a fuel pump (15) respectively.

8. Cylinder head according to Claim 6 or 7, characterised in that, to vaporise the fuel/steam mixture, the vaporizer (11) is heated by hot engine exhaust gas.

9. Cylinder head according to one of Claims 6 to 8, characterised in that the cylinder space (14) has an electric igniter (17) for the fuel vapour/steam mixture.

## Revendications

1. Procédé d'alimentation, après aspiration de l'air de combustion, du cylindre d'un moteur à piston en un mélange carburant contenant du combustible et de l'eau,
caractérisé,
en ce qu'il consiste à introduire, avant que soit atteint le point mort haut du piston, un mélange sous pression de vapeur de combustible et de vapeur d'eau dans l'air de combustion précomprimé lors de la course de compression,

2. Procédé suivant la revendication 1,
caractérisé,
en ce qu'il consiste à faire entrer le mélange de vapeur de combustible et de vapeur d'eau dans le cylindre à une grande vitesse, allant jusqu'à la vitesse du son.

3. Procédé suivant la revendication 1 ou 2,
caractérisé,

en ce que le mélange de vapeur de combustible et de vapeur d'eau présente un rapport quantitatif de la vapeur d'eau à la vapeur de combustible de 1:1 à 3:1.

4. Procédé suivant l'une des revendications 1, 2 ou 3,
caractérisé,

en ce qu'il consiste à introduire le mélange de vapeur de combustible et de vapeur d'eau à une température supérieure au point de rosée du combustible du mélange de vapeur de combustible et de vapeur d'eau.

5. Procédé suivant l'une des revendications précédentes,
caractérisé,

en ce qu'il consiste à introduire l'air de combustion dans le cylindre en un rapport quantitatif presque stoechiométrique, par rapport à la vapeur de combustible du mélange de vapeur de combustible et de vapeur d'eau.

6. Culasse de cylindre d'un moteur à piston pour la mise en oeuvre du procédé suivant l'une des revendications précédentes, comportant une soupape d'admission d'air, une soupape d'échappement pour les gaz d'échappement, et une admission débouchant dans la chambre de combustion au point mort haut du piston et à soupape d'admission réglable pour un mélange carburant contenant du combustible et de l'eau,
caractérisée,

en ce que la soupape d'admission (10) communique avec un conduit (9) résistant à la pression et destiné au mélange, qui convient pour une pression supérieure à la pression de compression et qui est raccordé à la sortie (13) d'un évaporateur (11) destiné à produire un mélange de vapeur de combustible et de vapeur d'eau, et en ce que la soupape d'admission (10) destinée à l'introduction du mélange de vapeur de combustible et de vapeur d'eau doit être ouverte lors de la course de compression.

7. Culasse de cylindre suivant la revendication 6,
caractérisée,

en ce que dans l'évaporateur (11) débouchent un conduit (16b) destiné à de l'eau sous pression et un conduit (15a) destiné à du combustible, qui sont raccordés du côté du refoulement à une pompe à eau (16) et à une pompe à combustible (15), respectivement.

8. Culasse de cylindre suivant la revendication 6 ou 7,
caractérisée,

en ce que l'évaporateur (11) est réchauffé par le gaz d'échappement chaud du moteur pour évaporer le mélange de combustible et de vapeur d'eau.

9. Culasse suivant l'une des revendications 6 à 8,
caractérisée,

en ce que le cylindre (14) comporte un dispositif électrique d'allumage (17) pour le mélange de vapeur de combustible et de vapeur d'eau.